(19) Europäisches Patentamt
European Patent Office
Office européen des brevets

(11) **EP 2 149 055 B1**

(12) **EUROPÄISCHE PATENTSCHRIFT**

(45) Veröffentlichungstag und Bekanntmachung des Hinweises auf die Patenterteilung:
**28.11.2012 Patentblatt 2012/48**

(21) Anmeldenummer: 08716397.8

(22) Anmeldetag: **10.03.2008**

(51) Int Cl.:
*G01S 3/802* *(2006.01)*  *G01S 3/808* *(2006.01)*

(86) Internationale Anmeldenummer:
**PCT/EP2008/001887**

(87) Internationale Veröffentlichungsnummer:
**WO 2008/131826 (06.11.2008 Gazette 2008/45)**

(54) **VERFAHREN ZUM GENERIEREN VON ZIELMARKIERENDEN PEILTRACKS**

Method for generating target tracks

Procédé pour produire des pistes de cibles

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **25.04.2007 DE 102007019445**

(43) Veröffentlichungstag der Anmeldung:
**03.02.2010 Patentblatt 2010/05**

(73) Patentinhaber: **ATLAS ELEKTRONIK GMBH 28309 Bremen (DE)**

(72) Erfinder:
• **HURKA, Jörg**
  **26161 Oldenburg (DE)**
• **FRITSCH, Rainer**
  **28325 Bremen (DE)**
• **MEYER, Ralf**
  **28790 Schwanewede (DE)**
• **STEIMEL, Ulrich**
  **28876 Oyten (DE)**
• **VOLKMER, Frank**
  **28325 Bremen (DE)**

(74) Vertreter: **Wasiljeff, Johannes M.B. et al Jabbusch Siekmann & Wasiljeff Patentanwälte Otto-Lilienthal-Strasse 25 28199 Bremen (DE)**

(56) Entgegenhaltungen:
• **MCINTYRE C M ET AL: "Data association in passive acoustic tracking" PROCEEDINGS OF THE SPIE - THE INTERNATIONAL SOCIETY FOR OPTICAL ENGINEERING USA, Bd. 1954, 1993, Seiten 376-385, XP002486023 ISSN: 0277-786X**
• **BLACKMAN S S: "Chapter 13: The use of multiple sensors for multiple-target tracking" 1986, MULTIPLE-TARGET TRACKING WITH RADAR APPLICATIONS , DEDHAM, ARTECH HOUSE INC, US, P. 357-396 , XP002486025 Seiten 366,367**
• **YEOM S-W ET AL: "Improving track continuity using track segment association" AEROSPACE CONFERENCE, 2003. PROCEEDINGS. 2003 IEEE MARCH 8-15, 2003, PISCATAWAY, NJ, USA,IEEE, Bd. 4, 8. März 2003 (2003-03-08), Seiten 4_1925-4_1941, XP010660418 ISBN: 978-0-7803-7651-9**
• **PAILON SHAR ET AL: "Passive Sonar Fusion for Submarine Systems" IEEE AEROSPACE AND ELECTRONIC SYSTEMS MAGAZINE, IEEE SERVICE CENTER, PISCATAWAY, NJ, US, Bd. 15, Nr. 3, 1. März 2000 (2000-03-01), Seiten 29-34, XP011090184 ISSN: 0885-8985**
• **MELLEMA G R: "Reverse-time tracking to enhance passive sonar" 2006 9TH INTERNATIONAL CONFERENCE ON INFORMATION FUSION IEEE PISCATAWAY, NJ, USA, 2006, Seite 8 pp., XP002486024 ISBN: 0-9721844-6-5**
• **GUAN XIM ET AL: "Bearings-only underwater track fusion solutions with feedback information" SIGNAL PROCESSING, 2004. PROCEEDINGS. ICSP '04. 2004 7TH INTERNATIONAL CONFERENCE ON BEIJING, CHINA AUG. 31 - SEPT 4, 2004, PISCATAWAY, NJ, USA,IEEE, Bd. 3, 31. August 2004 (2004-08-31), Seiten 2449-2452, XP010811248 ISBN: 978-0-7803-8406-4**

EP 2 149 055 B1

**Beschreibung**

Die Erfindung betrifft ein Verfahren zum Generieren von zielmarkierenden Peiltracks für mehrere schallabstrahlende Ziele, die in einem Seegebiet von mehreren, hydroakustische Empfangsantennen aufweisenden Sensoren gepeilt werden, nach dem Oberbegriff des Anspruchs 1.

In der Sonartechnik werden zur passiven Zielaufklärung eines Seegebiets von einem Trägerfahrzeug, z.B. U-Boot oder Oberflächenschiff, üblicherweise verschiedenartige Sensoren eingesetzt, die die Ziele über deren Schallabstrahlung ins Wasser auffassen und aufgefasste Ziele bis Zielverlust verfolgen und mehr oder weniger exakte Zieldaten liefern. (L. Kühnle "Classification and Identification - CAI - by Submarine Sonars", Naval Forces, Nov. 1987, S. 27 - 31). Unter einem Sensor wird dabei eine hydroakustische Empfangsantenne, auch Unterwasserantenne genannt, wie z.B. eine Zylinderbasis (Cylindrical Array Sonar CAS), eine Seitenantenne (Flank Array Sonar FAS), eine Schleppantenne (Towed Array Sonar TAS), sowie deren nachgeschaltete Signalverarbeitungsalgorithmen, wie Breitband-Detektion (Broadband Detection BDT) Demon und Lofar, verstanden. Sensoren im hier gebrauchten Sinne sind somit CAS BDT, FAS BDT, die Peilungen zu Zielen liefern, CAS Demon, FAS Demon, TAS Demon, FAS Lofar und TAS Lofar, die Frequenzlinien der Ziele liefern. Von den eingesetzten Sensoren erfassen einige Sensoren alle Ziele und einige Sensoren nur ein Teil der Ziele, z.B. wegen des durch die zugehörige Konfiguartion der Empfangsantenne vorgegebenen Frequenzbereichs und den damit einhergehenden unterschiedlichen Reichweiten oder wegen unterschiedlichen, tiefenabhängigen Schallausbreitungsbedingungen. Die von den Sensoren CAS BDT, FAS BDT, TAS BDT gelieferten Peilungen werden üblicherweise in zeitlicher Reihenfolge für jedes Ziel und jeden Sensor dargestellt und dem Sonarbediener in einer sog. Wasserfalldarstellung angeboten, bei der die Zeitachse, denen die Peilungen zugeordnet sind, vertikal verläuft und am oberen Bildrand immer die zeitlich jüngsten Peilungen angezeigt sind. Bei einer solchen Aufbereitung und Darstellung der Sensordaten als von jedem Sensor für jedes von ihm gepeilte Ziel gelieferte Peilungsspuren, nachfolgend Sensortracks genannt, muss der Bediener fortlaufend eine Vielzahl von Sensortracks verfolgen. Insbesondere bei sich kreuzenden Sensortracks oder zeitweise unterbrochenen Sensortracks ist es für den Bediener schwierig bis nahezu unmöglich, zu entscheiden, ob der nach Unterbrechung oder Kreuzung sich fortsetzende Sensortrack das gleiche Ziel verfolgt oder der Sensor sich auf ein anderes Ziel gesetzt hat.

Bei einem bekannten Verfahren zum Generieren von zielmarkierenden Peiltracks einer Vielzahl von durch mehrere Sensoren gepeilten schallabstrahlenden Zielen in einem Seegebiet (MCINTYRE C M ET AL: "Data association in passive acoustic tracking", PROCEEDINGS OF THE SPIE - THE INTERNATIONAL SOCIETY FOR OPTICAL ENGINEERING USA, Bd. 1954, 1993, Seiten 376-385, XP002486023, ISSN: 0277-786X) wird von jedem Sensor für jedes aufgefasste Ziel ein Sensortrack geliefert, der aus der zeitlich aufeinanderfolgenden Peilungen besteht. Sensortracks mehrerer Sensoren, die von ein- und demselben Ziel abgeleitet sind, werden zu Kontakttracks fusioniert, die nur Peilungen des gemeinsamen Ziels enthalten. Die Kontakttracks, welche zu verschiedenen Zeiten auftreten können, werden auf einem Display dargestellt und mit einem "Contact Icon" und einer "Numeric Designation" versehen, um den Operator eine Zuordnung zu ermöglichen.

Bei einem bekannten Verfahren zur Karrelation und Fusion von Sensortracks zur Anwendung in Mehrfachziel-Trackingsystemen mit mehreren Sensoren (BLACKMAN S S: "Chapter 13: The use of multiple sensors for multiple-target tracking", 1986, MULTIPLE-TARGET TRACKING WITH RADAR APPLICATIONS, DEDHAM, ARTECH HOUSE INC, US, P.357-396, XP002486025, Fig. 13-5) werden, ausgehend von dem genauesten Sensor als ersten Sensor, die Sensortracks, die zeitgleich von den Sensoren angeliefert werden, mittels einer sukzessiven Track-To-Track-Fusion zu Kontakttracks fusioniert. Dabei werden alle Sensortracks der Sensoren nacheinander in eine zentrale Trackdatei eingeschrieben und die jeweils nachfolgend eingeschriebenen Sensortracks mit dem zuvor eingeschrieben und bereits auf Zugehörigkeit geprüften Sensortracks auf Zugehörigkeit zu einem gemeinsamen Ziel geprüft und ggf. fusioniert. Eine Zuordnung zeitlich versetzt auftretender Sensortracks ist dabei nicht vorgesehen.

Bei einem Verfahren zur Zusammenfassung von zeitlich versetzten Tracksegmenten bei mehrfach Ziel-Tracking mit mehreren Sensoren (YEOM S-W. ET AL: "Improving track continuity using track segment association", AEROSPACE CONFERENCE, 2003, PROCEEDINGS. 2003 IEEE MARCH 8-15, 2003, PISCATAWAY, NJ, USA, IEEE, Bd. 4, 8. März 2003 (2003-03-08), Seiten 4_1925-4_1941, XP010660418, ISBN: 978-0-7803-7651-9) werden zeitlich zueinander versetzter Tracks mittels Kostenfunktion auf Zusammengehörigkeit geprüft und Tracks mit hoher Wahrscheinlichkeit einer Zusammengehörigkeit einander zugeordnet.

Der Erfindung liegt die Aufgabe zugrunde, ein Verfahren zur Generierung von zielmarkierenden Peiltracks oder zielmarkierenden Peilungsspuren anzugeben, das nur so viele zielmarkierende Peiltracks generiert, wie Ziele von der Gesamtheit der Sensoren aufgefasst werden, und das Trackstücke, die einunddasselbe Ziel markieren, zielrichtig einander zuordnet.

Die Aufgabe ist erfindungsgemäß durch die Merkmale des Anspruchs 1 gelöst.

Das erfindungsgemäße Verfahren hat den Vorteil, dass durch die Fusion der Sensortracks zu Kontakttracks eine Reduktion der Peilungsspuren, oder Peiltracks auf nur solche Peiltracks erreicht wird, die jeweils von einunddemselben detektierten Ziel herrühren - unabhängig davon von welchen Sensoren dieses Ziel verfolgt wird. Da damit die Zahl der Peilungsspuren deutlich abnimmt, wird der Sonarbediener bei der Zielüberwachung, Zielverfolgung und Zielauswahl sehr stark entlastet. Das vom Bediener beobachtete Display, auf dem ausschließlich Kontakttracks und Zieltracks, vorzugsweise in unterschiedlicher Farbgebung, dargestellt werden, wird für den Bediener überschaubarer, und einzelne Ziele lassen sich auch nach im Minutenbereich liegenden, längeren Beobachtungspausen durch den Bediener leicht wiederfinden.

Darüber hinaus bietet das erfindungsgemäße Verfahren erhebliche Vorteile für die Lageerarbeitung in einem Seegebiet mittels der sog. TMA-Funktion (Target Motion Analysis), bei welcher aus passiv ermittelten Peilungen Positionen von Zielen sowie deren Bewegungsrichtung und Bewegungsgeschwindigkeit als Zieldaten geschätzt werden. Da das erfindungsgemäße Verfahren eine zuverlässige Zuordnung von endenden und zeitlich später wiederauftauchenden Kontakttracks, die Peilungen von einunddemselben Ziel repräsentieren, vornimmt, kann die TMA-Funktion sowohl auf Peilungen aus den endenden Kontakttracks als auch auf Peilungen aus den wiederauftauchenden Kontakttracks gestützt werden. Insbesondere kann zum Schätzen der Zieldaten auf Peilungen zum gleichen Ziel zurückgegriffen werden, die vor einem Eigenmanöver des Trägerfahrzeugs liegen, so dass Peilungen von zwei vom Trägerfahrzeug durchfahrenen Wegstrecken zur Verfügung stehen. Durch den Zugriff auf Peilungen des gleichen Ziels aus der auch weit in der Vergangenheit zurückliegenden Messzeit können in sehr viel kürzerer Zeit zuverlässige Schätzungen der Zielposition, Zielgeschwindigkeit und Fahrtrichtung erreicht werden, da die TMA-Funktion dann zusammen mit den aktuellen Peilungen sehr viel schneller konvergiert. Zur TMA-Funktion wird auf die DE 101 29 726 A1 und DE 103 52 738 A1 verwiesen.

Durch das Zuordnen bzw. Zusammenführen zugehöriger Kontakttracks und das Überbrücken fehlender Peilungen über längere Zeiträume sowie durch die richtige Zuordnung zu den nachfolgenden Peilungen wird es möglich, eine Zuordnung der Zielparameter für die Klassifizierung der Ziele auch aus der Vergangenheit heraus vorzunehmen und auf das Fahrverhalten der Ziele, z.B. Manöverfahrten oder Geschwindigkeits - und/oder Kursänderungen, zu schließen.

Zweckmäßige Ausführungsformen des erfindungsgemäßen Verfahrens mit vorteilhaften Weiterbildungen und Ausgestaltungen der Erfindung ergeben sich aus den weiteren Ansprüchen.

Die Erfindung ist anhand eines in der Zeichnung illustrierten Ausführungsbeispiels im folgenden näher beschrieben. Es zeigen:

Fig. 1    ein Blockdiagramm einer sequenziellen Track-to-Track-Fusion mit beispielhafter Darstellung von daraus resultierenden Kontakttracks als Funktionen der Peilwinkel B über der Zeit t,

Fig. 2    eine Kostenmatrix für die Track-to-Track-Fusion von $N_A$ Sensortracks eines Sensors A und $N_B$ Sensortracks eines Sensors B,

Fig. 3    ein Zahlenbeispiel der Kostenmatrix in Fig. 2 für drei Sensortracks des Sensors A und drei Sensortracks des Sensors B,

Fig. 4    eine schematisierte, graphische Darstellung der jeweils drei Sensortracks der Sensoren A und B und der aus der Track-to-Track-Fusion dieser Sensortracks über die Kostenmatrix gemäß Fig. 3 zugeordneten und zu Kontakttracks (strichliniert dargestellt) fusionierten Sensortracks,

Fig. 5    eine Kostenmatrix für die Prüfung der Zugehörigkeit von vier neuen Kontakttracks NT und drei alten Kontakttracks OT, wie sie im Display in Fig. 1 schematisiert dargestellt sind.

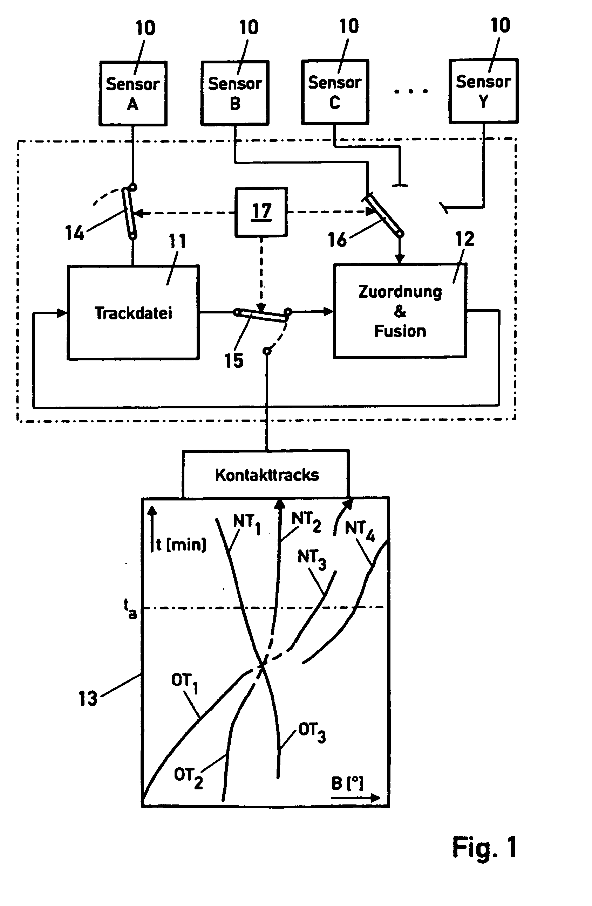

Mit dem in den Zeichnungen illustrierten Verfahren werden die fortlaufenden Peilungen (Peilwinkel B) von mehreren Zielen durch mehrere Sensoren, die als sog. Sensorspuren oder Sensortracks bezeichnet werden, so verarbeitet, dass nur noch Spuren oder Tracks vorhanden sind, die - unabhängig davon, welcher Sensor sie liefert - jeweils nur noch Peilungen einunddesselben Ziels enthalten. Dabei können die Sensortracks stückweise von verschiedenen Zielen stammen oder stückweise nur aus Rauschen bestehen und auch zeitlich unterbrochen sein. Hierzu werden in einem ersten Verfahrensschritt die Sensortracks der mehreren Sensoren 10, die in Fig. 1 mit A, B, C ... Y gekennzeichnet sind, ausgehend von dem genauesten Sensor, z.B. Sensor A, in einer sequenziellen Spur-zu-Spur- oder Track-to-Track-Fusion zu Kontakttracks fusioniert. Diese Kontakttracks sind zielspezifisch, d. h. jeder Kontakttrack enthält nur Peilungen in Form von Winkelangaben gegen eine Bezugsrichtung zu einunddemselben Ziel. Da die Sensortracks stückweise unterbrochen sein können, z.B. durch Zielverlust und erneutes Auffassen des alten oder eines neuen Ziels, werden damit auch Kontakttracks entstehen, die zu einem Zeitpunkt enden, und Kontakttracks entstehen, die zu einem anderen Zeitpunkt beginnen. Solche zeitlich versetzten Kontakttracks werden in einem zweiten Verfahrensschritt paarweise daraufhin überprüft, ob sie zusammengehören, d.h. ob ein neu beginnender Kontakttrack die Fortsetzung eines zuvor geendeten Kontakttrack ist oder ein neu aufgefasstes Ziel repräsentiert. Ergibt die Prüfung ein hohes Maß an Wahrscheinlichkeit, dass die Kontakttracks zueinander gehören, so wird in einem dritten Verfahrensschritt die Zuordnung durchgeführt und die einander zugeordneten Kontakttracks als Zieltracks ausgewiesen. Bevorzugt werden dabei in der graphischen Darstellung Ende und Anfang zweier einander zugeordneter Kontakttracks durch eine Linie miteinander zu einem Zieltrack verbunden, so dass unterbrechungslose Zieltracks vorhanden sind, die dem Sonarbediener ein leichtes Verfolgen der einzelnen Zieltracks auch nach deren Kreuzung möglich machen. Solche Verbindungslinien sind im Display der Fig. 1 strichliniert symbolisiert. Zieltracks sind in Fig. 1 $NT_1/OT_3$, $NT_2/OT_2$, $NT_3/OT_1$ und $NT_4$.

In Fig. 1 bis 4 ist beispielhaft eine sequenzielle Track-to-Track-Fusion illustriert, die als Ergebnis die Kontakttracks

liefert. Jeder der Sensoren 10 in Fig. 1 peilt ein oder mehrere Ziele im Seegebiet und liefert in zeitlicher Reihenfolge entsprechende Peilwinkel B, Peilungen genannt, die zeitlich aneinandergereiht Peilungsspuren der Sensoren 10, kurz Sensortracks genannt, ergeben. Ausgehend von dem genauesten Sensor, beispielsweise des Sensors A, der z.B. ein CAS BDT-Sensor ist, werden alle Sensortracks des Sensors A in eine zentrale Trackdatei 11 eingeschrieben. Die in der Trackdatei 11 enthaltenen Sensortracks werden im folgenden als zentrale Tracks bezeichnet. Zunächst werden die Sensortracks eines zweiten Sensors, z.B. des Sensors B, mit den in der Trackdatei 11 enthaltenen zentralen Tracks auf Zugehörigkeit oder Zuordnung zu einem gemeinsamen Ziel geprüft und bei einer ausreichend hohen Wahrscheinlichkeit an Zugehörigkeit dem jeweiligen zentralen Track zugeordnet und mit diesem fusioniert. Dies erfolgt im Block 12 "Zuordnung und Fusion". In der Trackdatei 11 werden die zentralen Tracks, aus denen die fusionierten Tracks hervorgegangen sind, mit den fusionierten Tracks überschrieben. Zentrale Tracks, denen keiner der Sensortracks des Sensors B zugeordnet worden sind, bleiben in der zentralen Trackdatei 11 erhalten. Sensortracks des Sensors B, die zu keiner Fusion mit einem der zentralen Tracks geführt haben, werden zusätzlich in die Trackdatei 11 eingeschrieben. Die Trackdatei 11 ist damit aktualisiert. Danach werden die Sensortracks des Sensors C mit den insgesamt in der aktualisierten Trackdatei 11 enthaltenen zentralen Tracks auf Zugehörigkeit oder auf Zuordnung zu einem gemeinsamen Ziel geprüft. Bei ausreichend hoher Wahrscheinlichkeit der Zugehörigkeit werden die Sensortracks des Sensors C den entsprechenden zentralen Tracks zugeordnet und mit diesen fusioniert. Mit den fusionierten Tracks werden in der Trackdatei 11 die zentralen Tracks, aus denen die fusionierten Tracks hervorgegangen sind, überschrieben. Nicht fusionierte Sensortracks des Sensors C werden zusätzlich in die Trackdatei 11 eingeschrieben. Diese Vorgänge wiederholen sich mit allen Sensortracks der nächsten Sensoren bis hin zu den Sensortracks des Sensors Y solange, bis alle Sensortracks als zentrale Tracks in der aktualisierten Trackdatei 11 enthalten sind. Die in der zuletzt aktualisierten Trackdatei 11 enthaltenen zentralen Tracks werden nunmehr als Kontakttracks ausgegeben und dem Sonarbediener in einem Display 13 graphisch angezeigt, wobei je ein Kontakttrack ein Ziel markiert und als Funktion des Peilwinkels B über der Zeit t dargestellt wird. Die in Fig. 1 eingezeichneten Umschalter 14, 15, 16 symbolisieren lediglich die Reihenfolge der beschriebenen Verfahrensschritte, so dass für das Einschreiben der Sensortracks des Sensors A in die Trackdatei 11 der Umschalter 14 geschlossen und danach wieder geöffnet wird, der Umschalter 15 für das Auslesen der zentralen Tracks aus der Trackdatei 11 zwecks Prüfung mit den Sensortracks der übrigen Sensoren 10 mit dem Block 12 verbunden ist und für das Auslesen der zuletzt aktualisierten Trackdatei 11 auf das Display 13 umgeschaltet wird und der Umschalter 16 für das Zuführen der Sensortracks der Sensoren B, C ... Y zum Block 12 nacheinander den Block 12 mit den jeweiligen Sensoren B, C, ... Y verbindet. Block 17 ist für die entsprechende Steuerung der Umschalter 14, 15, 16 zuständig und symbolisiert die Einleitung der entsprechenden Verfahrensschritte.

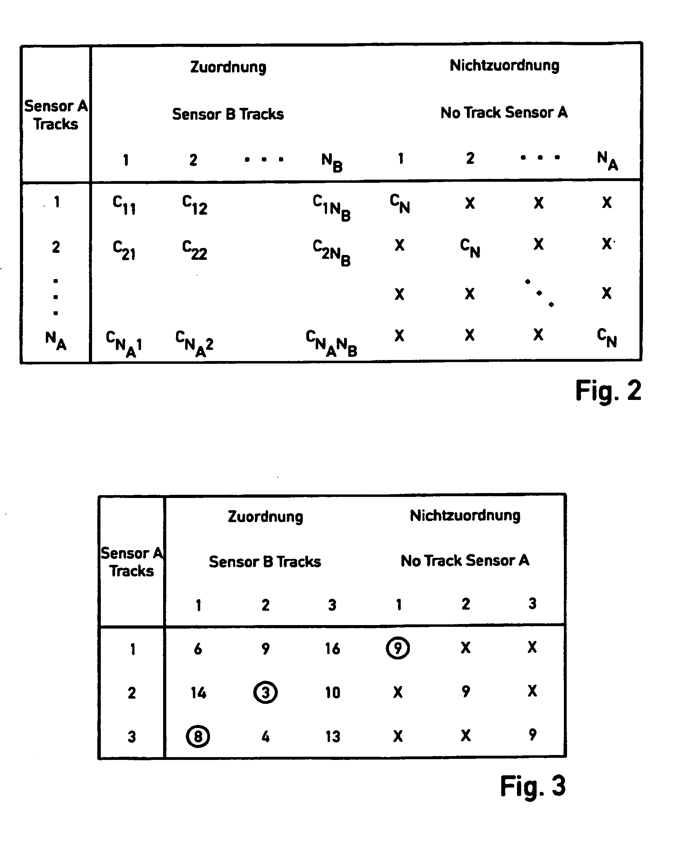

Die Prüfung der Zuordnung der zentralen Tracks und der von einem Sensor 10 angelieferten Sensortracks erfolgt nach der Global-Nearest-Neighbor-Methode (GNN-Methode). Das Ziel dieser GNN-Methode ist es, in jeder Zeitscheibe mit neuen Spur- oder Trackdaten die wahrscheinlichste Zuordnung der Spuren oder Tracks zweier Sensoren zu bestimmen. Hierzu wird mit den i zentralen Tracks der aktualisierten, zentralen Trackdatei 11 und den j Sensortracks eines beliebigen Sensors 10 eine zweiteilige Kostenmatrix mit einem Zuordnungsteil und einem Nichtzuordnungsteil aufgestellt. In den Zuordnungsteil werden die Kosten der wechselseitigen Zuordnung der i zentralen Tracks und der j Sensortracks des entsprechenden Sensors 10 und in den Nichtzuordnungsteil die Kosten der Nichtzuordnung der zentralen Tracks eingetragen. In Fig. 2 ist ein Beispiel für die Kostenmatrix dargestellt, in welchem angenommen ist, dass in der zentralen Trackdatei 11 ausschließlich die Sensortracks 1 bis $N_A$ des Sensors A enthalten sind, die als zentrale Tracks im Block 12 "Zuordnung und Fusion" mit den Sensortracks 1 bis $N_B$ des Sensors B geprüft und ggf. fusioniert werden.

Die Zuordnungskosten $C_{i,j}$, in Fig. 2 $C_{11}$, $C_{12}$ ... $C_{NA,NB}$, werden zum Zeitpunkt $t_k$ als Summe der Quadrate der normierten statistischen Abstände der Peilungen und der Summe der normierten statistischen Abstände der Peilraten berechnet, wobei wahlweise auf eine Hinzuziehung der Abstände der Peilraten verzichtet werden kann. Ist $\Theta$ die Peilung, $\dot{\Theta}$ die Peilrate, und $\sigma$ die jeweilige Standardabweichung, so ergibt sich für die Zuordnungskosten $C_{i,j}$

$$C_{i,j} = \sum_{n=k-b1+1}^{k} \frac{\left(\Theta_{A,i,n} - \Theta_{B,j,n}\right)^2}{\sigma^2_{\Theta_{A,i,n}} + \sigma^2_{\Theta_{B,j,n}}} + \alpha \cdot \sum_{n=k-b1+1}^{k} \frac{\left(\dot{\Theta}_{A,i,n} - \dot{\Theta}_{B,j,n}\right)^2}{\sigma^2_{\dot{\Theta}_{A,i,n}} + \sigma^2_{\dot{\Theta}_{B,j,n}}} \quad (1),$$

wobei die Summation über ein gleitendes Zeitfenster der Länge bl erfolgt. Wird $\alpha=0$ gewählt, so wird auf die Einbeziehung der Peilraten in die Kostenrechnung verzichtet. Wird $\alpha=1$ gewählt, so werden die Peilraten in die Kostenrechnung mit einbezogen. Die Kosten für die Nichtzuordnung aller i zentralen Tracks (im Beispiel die Sensortracks des Sensors A) zu den Sensortracks des Sensors B werden für alle in der Trackdatei 11 vorhandenen i zentralen Tracks mit einem gleichen Wert $C_N$ vorgegeben. Die in dem Nichtzuordnungsteil enthaltenen Kombinationsmöglichkeiten der Sensortracks, die verboten bzw. nicht möglich sind, sind mit einem X gekennzeichnet, das einen sehr großen Wert darstellt.

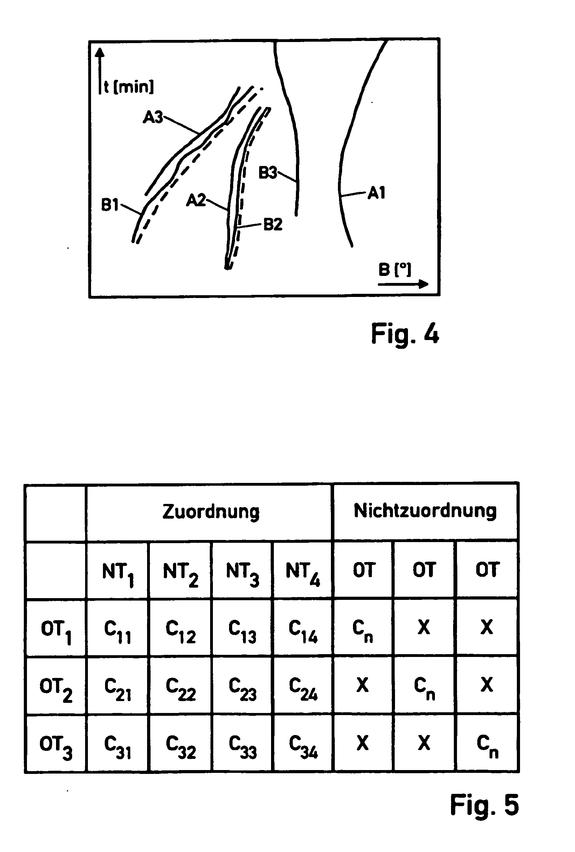

In Fig. 3 ist ein Zahlenbeispiel für die nach Gl.(1) berechneten Kosten bei der Prüfung von drei Sensortracks des Sensors A mit drei Sensortracks des Sensors B, wie sie graphisch in Fig. 4 dargestellt sind, angegeben. Die Kosten für die Nichtzuordnung der drei Sensortracks des Sensors A zu jedem der Sensortracks des Sensors B, der sog. Gate-Wert, ist mit "9" vorgegeben. Diesem Gate-Wert liegt die Überlegung zugrunde, dass die Wahrscheinlichkeit, dass zwei zusammengehörige Spuren oder Sensortracks einen Kostenwert verursachen, der größer "9" ist, nur 0,27% beträgt. Dieses Wahrscheinlichkeitsniveau wird in vielen Anwendungen verwendet. Selbstverständlich kann der Gate-Wert anders gewählt werden, z.B. "12". Allerdings werden bei einem solchen, höheren Gate-Wert auch mehr unwahrscheinlichere Zuordnungen zugelassen.

In der Kostenmatrix werden nun diejenigen Matrixelemente bestimmt, deren aufaddierte Kosten ein Minimum ergeben, oder anders gesagt, diejenigen Sensortrack-Paarungen bestimmt, deren Kosten $C_{i,j}$ die kleinste Summe ergeben. Die Berechnung des Kostenminimums wird mittels des Auction-Algorithmus oder nach der JVC-(Jonker Vogelnant Castañon) Methode durchgeführt. Diese Methoden sind in "D.P. Bertsekas, Auction algorithms for network flow problems: A tutorial introduction, Computational Optimization and Application, Vol. 1, pp.7-66, 1992" und "O.E. Drummond, D.A. Castañon, M.S. Bellovin, Comparison of 2-D assignment algorithms for rectangular, floating point cost matrices, Proc. of SDI Panls on Tracking, No. 4, Dec. 1990 pp.81-97" beschrieben.

In dem Zahlenbeispiel der Fig. 3 ergibt sich das Kostenminimum für die in Fig. 3 eingekreisten Matrixelemente. Diese Matrixelemente mit den geringsten Kosten bestimmen die Zuordnungspaarungen der Sensortracks. Im Ausführungsbeispiel der Fig. 3 werden somit die Sensortracks A2 und B2 mit den Kosten $C_{22}=3$ und die Sensortracks A3 und B1 mit den Kosten $C_{31}=8$ einander paarweise zugeordnet.

Die Fusion der einander zugeordneten Sensortracks, im Beispiel die Sensortracks A2 und B2 einerseits und A3 und B1 anderseits, und damit die Generierung des fusionierten zentralen Tracks erfolgt durch konvexe Addition. Ist beispielsweise $X_1$ der Zustandsvektor des einen Sensortracks und $P_1$ die zugehörige Kovarianzmatrix und $X_2$ der Zustandsvektor des anderen Sensortracks und $P_2$ die zugehörige Kovarianzmatrix, so ergibt sich der Zustandsvektor X des fusionierten Tracks zu:

$$X = P_2\left(P_1 + P_2\right)^{-1}X_1 + P_1\left(P_1 + P_2\right)^{-1}X_2 \qquad (2)$$

oder

$$X = P\left(P_1^{-1}X_1 + P_2^{-1}X_2\right) \qquad (3)$$

und die Kovarianzmatrix P des fusionierten Tracks zu:

$$P = P_1\left(P_1 + P_2\right)^{-1}P_2 \qquad (4),$$

wobei für den Zustandsvektor gilt:

$$X = \begin{bmatrix} \Theta \\ \dot{\Theta} \end{bmatrix} \qquad (5)$$

und für die Konvarianzmatrix gilt:

$$P = \begin{bmatrix} \sigma_\theta^2 & \sigma_{\theta\dot\theta}^2 \\ \sigma_{\theta\dot\theta}^2 & \sigma_{\dot\theta}^2 \end{bmatrix} \qquad (6).$$

In Fig. 4 sind beispielhaft die in der Kostenmatrix der Fig. 3 enthaltenen Sensortracks A1, A2, A3 und B1, B2 und B3 als Funktion des Peilwinkels B über der Zeit t schematisiert skizziert. Die durch Fusion der Sensoren $A_3$ und $B_1$ sowie $A_2$ und $B_2$ sich ergebenden Kontakttracks sind in Fig. 4 strichliniert angedeutet. In der Trackdatei 11 werden somit die als zentrale Tracks enthaltenen Sensortracks A2 und A3 mit den fusionierten Tracks überschrieben, der Sensortrack A1 bleibt erhalten und der nicht zugeordnete Sensortrack B3 wird ebenfalls in die zentrale Trackdatei 11 als weiterer zentraler Track eingeschrieben. Wäre kein weiterer Sensor vorhanden, so würden nunmehr die in der zentralen Trackdatei 11 enthaltenen zentralen Tracks als Kontakttracks ausgegeben und im Display des Sonarbedieners in der in Fig. 4 dargestellten Weise angezeigt, so dass die Kontakttracks A1, B3 sowie die aus der Fusion hervorgegangenen Kontakttracks, die strichliniert dargestellt sind, sichtbar werden.

Bei Zielverlust, d.h. wenn einer oder mehrere Sensoren 10 das Ziel nicht mehr erfasst bzw. erfassen, enden auch die Kontakttracks. Bei erneuter Zielauffassung durch die Sensoren 10, sei es bei Wiederauffassung des alten Ziels oder Auffassung eines neuen Ziels, entstehen neue Kontakttracks, wie dies im Display 13 der Fig. 1 illustriert ist. Diese zeitlich versetzten Kontakttracks werden nunmehr auf die Wahrscheinlichkeit ihrer Zusammengehörigkeit geprüft, d.h. geprüft, ob ein neu beginnender Kontakttrack die Fortsetzung eines zuvor geendeten Kontakttracks ist oder der neu beginnende Kontakttrack ein neu aufgefasstes Ziel markiert. Hierzu werden in vorgegebenen Zeitintervallen, z.B. alle 2 min, die zu einem aktuellen Zeitpunkt $t_a$ (Fig. 1) vorhandenen Kontakttracks als neue Kontakttracks NT und alle Kontakttracks, deren Trackende vor dem aktuellen Zeitpunkt $t_a$ liegt, als alte Kontakttracks OT aufgesucht und alle neuen und alten Kontakttracks NT, OT mittels Kostenrechnung auf paarweise Zugehörigkeit zueinander geprüft. Im Beispiel der Fig. 1 sind zum aktuellen Zeitpunkt $t_a$ die neuen Tracks $NT_1$, $NT_2$, $NT_3$ und $NT_4$ vorhanden und besitzen die alten Kontakttracks $OT_1$, $OT_2$ und $OT_3$ ein Ende. Mit allen zum aktuellen Zeitpunkt $t_a$ gefundenen j neuen Kontakttracks $NT_j$ und i alten Kontakttracks $OT_i$ wird eine zweiteilige Kostenmatrix mit einem Zuordnungsteil und einem Nichtzuordnungsteil aufgestellt, wie sie in Fig. 5 illustriert ist. In den Zuordnungsteil werden die Kosten $C_{i,j}$ der wechselseitigen Zuordnung der j neuen und i alten Kontakttracks NT bzw. OT und in den Nichtzuordnungsteil die Kosten $C_n$ der Nichtzuordnung der i alten Kontakttrack $OT_i$ eingetragen. Zur Kostenberechnung werden für alle gefundenen neuen Kontakttracks $NT_j$ für die Zeitlücken zwischen dem Zeitpunkt ihres Beginns und dem Zeitpunkt des Endes der alten Kontakttracks $OT_i$ Peilungen $B_{retro}^j$ retrodiziert und für alle gefundenen alten Kontakttracks $OT_i$ für die Zeitlücken zwischen dem Zeitpunkt ihres Endes und dem Zeitpunkt des Beginns der neuen Kontakttracks $NT_j$ Peilungen $B_{pra}^i$ prädiziert. Daraus werden die Zuordnungskosten $C_{i,j}^k$ für einen Zeitpunkt $t_k$ gemäß

$$C_{i,j}^k = \frac{[B_{pra}^i(t_k) - B_{retro}^j(t_k)]^2}{\sigma_{B_{pra}^i}^2(t_k) + \sigma_{B_{retro}^j}^2(t_k)} \qquad (7)$$

berechnet. $\sigma_{Bpra}$ und $\sigma_{Bretro}$ sind die Standardabweichungen der prädizierten bzw. retrodizierten Peilungen der Kontakttracks einer Kontakttrack-Paarung $OT_i$ und $NT_j$. Die in die Kostenmatrix gemäß Fig. 2 einzutragenden Kosten $C_{i,j}$ sind dann die gemittelten Kosten zu dem Zeitpunkten $t_1$, der durch das zeitliche Ende des alten Kontakttrack $OT_i$ bestimmt ist, für einen Zeitpunkt $t_{Npra}$, der durch den Beginn des neuen Kontakttrack $NT_j$ bestimmt ist und für einen Zeitpunkt $t_{Npra/2}$, der durch die halbe Zeitdifferenz zwischen dem Ende $t_1$ des alten und dem Beginn $t_{Npra}$ des neuen Kontakttracks bestimmt ist, gemäß

$$C_{i,j} = \frac{1}{3}\left(C_{i,j}^1 + C_{i,j}^{N_{pra}/2} + C^{N_{pra}}\right) \qquad (8).$$

Vor der Retrodiktion der Peilungen in die Zeitlücken werden die neuen Kontakttracks $NT_j$ durch eine rückwärts gerichtete Glättung, vorzugsweise nach der Rauch-Tung-Striebel-Methode, geglättet. Der Kosteneintrag $C_n$ für die Nichtzuordnung der alten Kontakttracks $OT_i$ zu den neuen Kontakttracks $NT_j$ wird jeweils wieder als fester Wert vorgegeben, wobei beispielhaft $C_n=9$ gewählt wird.

Anstelle der Berechnung zu den drei angegebenen Zeitpunkten $t_1$, $t_{Npra}$ und $t_{Npra/2}$ können auch die Zuordnungskosten für eine Vielzahl von vorzugsweise äquidistanten Zeitpunkten $t_k$ zwischen dem Ende $t_1$ des alten Kontakttrack und dem Beginn $t_{Npra}$ des neuen Kontakttrack berechnet werden und zum Kosteneintrag $C_{i,j}$ in den Zuordnungsteil der Kostenmatrix die gemittelte Summe der Zuordnungskosten $C_{i,j}^k$ verwendet werden, gemäß

$$C_{i,j} = \frac{1}{N_{pra}} \sum_{k=1}^{N_{pra}} C_{i,j}^k \qquad (9).$$

Sind die Kosten $C_{i,j}$ für die Zuordnung ebenso wie die Kosten $C_n$ für die Nichtzuordnung in die Kostenmatrix gemäß Fig. 5 eingetragen, so werden wiederum diejenigen Matrixelemente bzw. Kontakttrack-Paarungen bestimmt, deren aufaddierte Kosten ein Minimum ergeben. Hierzu wird wiederum der Auction-Algorithmus oder der JVC-Algorithmus eingesetzt. Diejenigen Matrixelemente, deren aufaddierte Kosten ein Minimum ergeben, definieren die Kontakttrack-Paarungen $OT_i$, $NT_j$, die einander zugeordnet und als Zieltrack ausgewiesen werden. Wie bereits erwähnt, werden in der bildlichen Darstellung der Kontakttracks die Zeitlücken zwischen den einander zugeordneten alten und neuen Kontakttracks $OT_i$ und $NT_j$ durch Linien ausgefüllt, die das Ende des zugeordneten alten Kontakttrack und den Anfang des zugeordneten neuen Kontakttracks miteinander verbinden. Diese Linien sind vorzugsweise Geraden. Die miteinander verbundenen, zugeordneten Kontakttracks und die ununterbrochenen Kontakttracks sind Zieltracks, die jeweils eine einem Ziel zugehörige Spur von Peilungen ausweisen.

Um unwahrscheinliche Zuordnungen von neuen Kontakttracks NT und alten Kontakttracks OT auszuschließen und die Berechnungszeit für das Kostenminimum aus der Kostenmatrix zu reduzieren, werden die in die Kostenmatrix einzutragenden Kosten $C_{i,j}$ für die Zuordnung für eine Kontakttrack-Paarung eines alten und eines neuen Kontakttrack mit einem willkürlich vorgegebenen Maximalwert angesetzt, wenn die Zeitdifferenz zwischen dem Beginn des neuen Kontakttracks $NT_j$ und dem Ende des alten Kontakttrack $OT_i$ größer ist als ein Vorgabewert, z.B. 10 min.

Zur Kostenberechnung können auch anstelle der prädizierten und retrodizierten Peilungen Peilraten herangezogen werden. In diesem Fall werden für alle gefundenen neuen Kontakttracks $NT_j$ für die Zeitlücken zwischen dem Zeitpunkt ihres Beginns und dem Zeitpunkt des Endes der alten Kontakttracks Peilraten $BR_{retro}^j$ retrodiziert und für alle gefundenen alten Kontakttracks $OT_i$ für die Zeitlücken zwischen dem Zeitpunkt ihres Endes und dem Zeitpunkt des Beginns der neuen Kontakttracks $NT_j$ Peilraten $BR_{pra}^i$ prädiziert und die Zuordnungskosten für einen Zeitpunkt $t_k$ gemäß

$$C_{i,j}^k = \frac{\left[BR_{pra}^i(t_k) - BR_{retro}^j(t_k)\right]^2}{\sigma_{BR_{pra}^i}^2(t_k) + \sigma_{BR_{retro}^j}^2(t_k)} \qquad (10).$$

berechnet. $\sigma_{BRpra}$ und $\sigma_{BRretro}$ sind die Standardabweichungen der prädizierten und retrodizierten Peilraten. Zur Eintragung in die Kostenmatrix gelangen dann die Kosten $C_{i,j}$ als Mittel aus den Zuordnungskosten $C_{i,j}^k$, die nach Gl. (10) für den durch das zeitliche Ende des alten Kontakttracks $OT_i$ bestimmten Zeitpunkt $k=t_1$ und für den durch den Beginn des neuen Kontakttracks $NT_j$ bestimmten Zeitpunkt $k=t_{Npra}$, berechnet werden, gemäß

$$C_{i,j} = \frac{1}{2}\left(C_{i,j}^1 + C_{i,j}^{N_{pra}}\right) \tag{11}$$

Wie bei Verwendung der Peilungen wird auch hier vor der Retrodiktion der Peilraten in die Zeitlücken der jeweils gefundene neue Kontakttrack durch eine rückwärts gerichtete Glättung, vorzugsweise nach der Rauch-Tung-Striebel-Methode, geglättet.

Alternativ kann zur Kostenberechnung auch das Nutz-Stör-Verhältnis, im folgenden SNR (Signal-Noise-Ration) genannt, der z.B. von einem CAS BDT-Sensor abgenommenen Peilungen verwendet werden, dass als Attribut den Peilungen zugeordnet ist. In diesem Fall werden für alle gefundene neuen Kontakttracks $NT_j$ für die Zeitlücken zwischen dem Zeitpunkt ihres Beginns und dem Zeitpunkt des Endes der alten Kontakttracks $OT_i$ SNR-Werte $SNR_{retro}$ retrodiziert und für alle gefundenen alten Kontakttracks $OT_i$ für die Zeitlücken zwischen dem Zeitpunkt ihres Endes und dem Zeitpunkt des Beginns der neuen Kontakttracks $NT_j$ SNR-Werte $SNR_{prä}$ prädiziert. Die Zuordnungskosten $C_{i,j}^k$ für einen Zeitpunkt $t_k$ werden aus der Differenz zwischen den für diesen Zeitpunkt $t_k$ prädizierten und retrodizierten SNR-Werte $SNR_{prä}$ und $SNR_{retro}$ und deren Standardabweichungen $\sigma_{SNRplä}$ und $\sigma_{SNRretro}$ der Kontakttracks einer Kontakttrack-Paarung gemäß

$$C_{i,j}^k = \frac{SNR_{prä}(t_k) - SNR_{retro}(t_k)}{\sigma_{SNR_{prä}}^2(t_k) + \sigma_{SNR_{retro}}^2(t_k)} \tag{12}$$

berechnet. Die in die Kostenmatrix gemäß Fig. 2 einzutragenden Kosten $C_{i,j}$ sind dann die gemittelte Summe gemäß Gl.(9) der Zuordnungskosten $C_{i,j}^k$, die für eine Vielzahl von vorzugsweise äquidistanten Zeitpunkten $t_k$ zwischen dem Ende $t_1$ des alten Kontakttracks $OT_i$ und dem Beginn $t_{Npra}$ des neuen Kontakttrack für eine Kontakttrack-Paarung gemäß Gl.(12) berechnet worden sind. Alternativ können zur

Eintragung in die Kostenmatrix auch die Kosten $C_{i,j}$ herangezogen werden, die gemäß Gl.(11) das Mittel aus den Zuordnungskosten $C_{i,j}^k$, bilden die wiederum aus Gl.(12) für den durch das zeitliche Ende des alten Kontakttracks $OT_i$ bestimmten Zeitpunkt $k=t_l$ und für den durch den Beginn des neuen Kontakttracks $NT_j$ bestimmten Zeitpunkt $k = t_{Npra}$ berechnet werden.

In einer alternativen Verfahrensvariante werden zur Kostenberechnung der Kosten $C_{i,j}$ für die Zuordnung für alle gefundenen neuen und alten Kontakttracks $NT_j$ bzw. $OT_i$ deren Frequenzlinien $FL_{NT}$ bzw. $FL_{OT}$ aufgesucht, die üblicherweise den Peilungen, also den Kontakttracks, als Attribute zugeordnet sind. Die Zuordnungskosten werden nunmehr aus der Frequenzdifferenz der Frequenzlinien $FL_{OT}$ und $FL_{NT}$ und deren Standardabweichung $\sigma_{FLOT}$ und $\sigma_{FLNT}$ der Kontakttracks einer Kontakttrack-Paarung berechnet, also gemäß

$$C_{i,j}^k = \frac{\left(FL_{OTi}^k - FL_{NTj}^k\right)^2}{\sigma_{FL_{OTi}}^2 + \sigma_{FL_{OTj}}^2} \tag{13}.$$

Bei einer gleichen Anzahl k von Frequenzlinien in jedem Kontakttrack eines Kontakttracks der Kontakttrack-Paarungen mit k=1,2 ... $N_{FL}$ wird zum Kosteneintrag in den Zuordnungsteil der Kostenmatrix die Summe der für alle k Frequenzlinien berechneten Zuordnungskosten gemittelt, gemäß

$$C_{i,j} = \frac{1}{N_{FL}} \sum_{k=1}^{N_{FL}} C_{i,j}^k \qquad (14).$$

Besitzen dagegen die alten und neuen Kontakttracks eine unterschiedliche Anzahl von Frequenzlinien, so werden die Zuordnungskosten $C_{i,j}^k$ nur für diejenigen Kontakttrack-Paarungen von alten und neuen Kontakttracks $OT_i$, $NT_j$ berechnet, bei denen Frequenzlinienpaare mit einer gegenüber einem Vorgabewert kleineren Frequenzdifferenz auftreten. $k = 1, 2 ... N_{Paare}$ ist dabei die Numerierung der gefundenen Frequenzlinienpaare. Beispielhaft wird als Vorgabewert eine Frequenzdifferenz von 2Hz angenommen. Die in den Zuordnungsteil der Kostenmatrix einzutragenden Kosten $C_{i,j}$ für die Zuordnung berechnen sich dann aus der gemittelten Summe der für alle $N_{Paare}$ Frequenzlinienpaare berechneten Zuordnungskosten dividiert durch die quadrierte Anzahl von gefundenen Frequenzlinienpaaren gemäß

$$C_{i,j} = \frac{1}{N_{Paare}^2} \sum_{k=1}^{N_{Paare}} C_{i,j}^k \qquad (15).$$

Außerdem werden in den Zuordnungsteil der Kostenmatrix die Kosten für alle Kontakttrack-Paarungen, die keine solche Frequenzlinienpaare aufweisen, auf ein willkürliches Maximum gesetzt.

Nach Aufstellen dieser Kostenmatrix wird in gleicher Weise das Minimum der aufaddierten Kosten der Matrixelemente nach dem Auction-Algorithmus oder dem JVC-Algorithmus bestimmt und wie beschrieben die Zuordnung der Kontakttracks vorgenommen.

**Patentansprüche**

1. Verfahren zum Generieren von zielmarkierenden Peiltracks für mehrere schallabstrahlende Ziele, die in einem Seegebiet von mehre=en, hydroakustische Empfangsantennen aufweisenden Sensoren gepeilt werden, bei welchem von jedem Sensor für jedes aufgefasste Ziel ein aus zeitlich aufeinanderfolgenden Peilungen bestehender Sensortrack angeliefert wird und Sensortracks mehrerer Sensoren, die von einen gemeinsamen Ziel abgeleitet sind, zu Kontakttracks, die jeweils nur Peilungen des gemeinsamen Ziels enthalten, fusioniert werden, **dadurch gekennzeichnet, dass** die Fusion der Sensortracks ausgehend von den Sensortracks des genauesten Sensors in einer sequenziellen Track-to-Track-Fusion durchgeführt wird, zeitlich zueinander versetzte Kontakttracks auf die Wahrscheinlichkeit ihrer Zusammengehörigkeit geprüft und hierzu in vorgegebenen Zeitintervallen jeweils alle zu einem aktuellen Zeitpunkt, $t_a$ vorhandenen Kontakttracks als neue Kontakttracks (NT) und alle Kontakttracks, deren Trakkende vor dem aktuellen Zeitpunkt $t_a$ liegt, als alte Kontakttracks (OT) aufgesucht und alle alten und neuen Kontakttracks mittels Kostenrechnung auf paarweise Zugehörigkeit zueinander in der Weise geprüft werden, dass mit allen zum aktuellen Zeitpunkt $t_a$ gefundenen j neuen und i alten Kontakttracks eine zweiteilige Kostenmatrix mit einem Zuordnungsteil und einem Nichtzuordnungsteil aufgestellt wird, in deren Zuordnungsteil die Kosten $C_{i,j}$ der wechselseitigen Zuordnung der j neuen und i alten Kontakttracks und in deren Nichtzuordnungsteil die Kosten $C_n$ der Nichtzuordnung der i alten Kontakttracks (OT) eingetragen und diejenigen Matrixelemente bestimmt werden, deren aufaddierte Kosten ein Minimum ergeben, und dass die neuen und alten Kontakttracks der durch die bestimmten Matrixelemente definierten Kontakttrack-Paarungen als zeitlich versetzte Kontakttracks mit hoher Wahrscheinlichkeit einer Zusammengehörigkeit einander zugeordnet und die einander zugeordneten Kontakttracks als unterbrechungslose Zieltracks ausgewiesen werden.

2. Verfahren nach Anspruch 1, **dadurch gekennzeichnet, dass** zur Kostenberechnung für alle gefundenen neuen Kontakttracks (NT) für die Zeitlücken zwischen dem Zeitpunkt ihres Beginns und dem Zeitpunkt des Endes der alten Kontakttracks (OT) Peilungen retrodiziert und für alle gefundenen alten Kontakttracks (OT) für die Zeitlücken zwischen dem Zeitpunkt ihres Endes und dem Zeitpunkt des Beginns der neuen Kontakttracks (NT) Peilungen prädiziert werden, dass die Zuordnungskosten für einen Zeitpunkt $t_k$ aus der Differenz zwischen den für diesen Zeitpunkt $t_k$ prädizierten und retrodizierten Peilungen $B_{prä}$; $B_{retro}$ und deren Standardabweichungen $\sigma_{Bypra}$; $\sigma_{Bretro}$ der Kontaktracks einer Kontakttrack-Paarung berechnet werden gemäß

$$C_{i,j}^{k} = \frac{\left[B_{prä}^{i}(t_k) - B_{retro}^{j}(t_k)\right]^2}{\sigma_{B_{pra}^{i}}^{2}(t_k) + \sigma_{B_{retro}^{j}}^{2}(t_k)} \, .$$

3. Verfahren nach Anspruch 2, **dadurch gekennzeichnet, dass** die Zuordnungskosten für einen Zeitpunkt $t_1$, der durch das zeitliche Ende des alten Kontakttrack (OT) bestimmt ist, für einen Zeitpunkt $t_{Npra}$, der durch den Beginn des neuen Kontakttrack (NT) bestimmt ist, und für einen Zeitpunkt $t_{Npra/2}$, der durch die halbe Zeitdifferenz zwischen dem Ende des alten und dem Beginn des neuen Kontakttrack bestimmt ist, berechnet werden und dass zum Kosteneintrag in den Zuordnungsteil der Kostenmatrix die Summe der berechneten Zuordnungskosten gemittelt wird.

4. Verfahren nach Anspruch 1, **dadurch gekennzeichnet, dass** zur Kostenberechnung für alle gefundenen neuen Kontakttracks (NT) Werte des Nutz/Stör-Verhältnisses (SNR-Werte) für die Zeitlücken zwischen den Zeitpunkten ihres Beginns und dem Zeitpunkt des Endes der alten Kontakttracks (OT) retrodiziert und für alle gefundenen alten Kontakttracks (OT) SNR-Werte für die Zeitlücken zwischen dem Zeitpunkt ihres Endes und dem Beginn der neuen Kontakttracks (NT) prädiziert werden, dass die Zuordnungskosten $C_{i,j}^{k}$ für einen Zeitpunkt $t_k$ aus der Differenz zwischen den für diesen Zeitpunkt prädizierten und retrodizierten SNR-Werte ($SNR_{prä}$; $SNR_{retro}$) und deren Standardabweichungen $\sigma_{SNRpra}$; $\sigma_{SNRretro}$ der Kontakttracks einer Kontaktrack-Paarung berechnet werden, gemäß

$$C_{i,j}^{k} = \frac{SNR_{prä}(t_k) - SNR_{retro}(t_k)}{\sigma_{SNR_{pra}}^{2}(t_k) + \sigma_{SNR_{retro}}^{2}(t_k)} \, .$$

5. Verfahren nach Anspruch 2 oder 4, **dadurch gekennzeichnet, dass** die Zuordnungskosten für eine Vielzahl von vorzugsweise äquidistanten Zeitpunkten $t_k$ zwischen dem Ende $t_1$ des alten Kontakttrack (OT) und dem Beginn $t_{Npra}$ des neuen Kontakttrack (NT) berechnet werden und zum Kosteneintrag in den Zuordnungsteil der Kostenmatrix die Summe der berechneten Zuordnungskosten gemittelt wird, gemäß

$$C_{i,j} = \frac{1}{N_{prä}} \sum_{k=1}^{N_{pra}} C_{i,j}^{k} \, .$$

6. Verfahren nach Anspruch 1, **dadurch gekennzeichnet, dass** zur Kostenberechnung für alle gefundenen neuen Kontakttracks (NT) Peilraten für die Zeitlücken zwischen dem Zeitpunkt ihres Beginns und dem Zeitpunkt des Endes der alten Kontakttracks (OT) retrodiziert und für alle gefundenen alten Kontakttracks (OT) Peilraten für die Zeitlücken zwischen dem Zeitpunkt ihres Endes und dem Zeitpunkt des Beginns der neuen Kontackttracks (NT) prädiziert werden, dass die Zuordnungskosten für einen Zeitpunkt $t_k$ aus der Differenz zwischen den für diesen Zeitpunkt $t_k$ prädizierten und retrodizierten Peilraten $BR_{prä}$; $BR_{retro}$ und deren Standardabweichungen $\sigma_{BRpra}$; $\sigma_{BRretro}$ der Kontakttracks einer Kontakttrack-Paarung berechnet wird gemäß

$$C_{i,j}^{k} = \frac{\left[BR_{prä}^{i}(t_k) - BR_{retro}^{j}(t_k)\right]^2}{\sigma_{BR_{pra}^{i}}^2(t_k) + \sigma_{BR_{retro}^{j}}^2(t_k)} \cdot$$

7. Verfahren nach Anspruch 4 oder 6, **dadurch gekennzeichnet, dass** die Zuordnungskosten für einen Zeitpunkt $t_1$, der durch das zeitliche Ende des alten Kontakttrack (OT) bestimmt ist, und für einen Zeitpunkt $t_{Npra}$, der durch den Beginn des neuen Kontakttrack (NT) bestimmt ist, berechnet werden und zum Kosteneintrag in den Zuordnungsteil der Kostenmatrix die Summe der berechneten Zuordnungskosten gemittelt wird.

8. Verfahren nach einem der Ansprüche 2 bis 7, **dadurch gekennzeichnet, dass** die gefundenen neuen Kontakttracks (NT) vor der Retrodiktion der Peilungen bzw. der Peilraten bzw. SNR-Werte in die Zeitlücken durch eine rückwärts gerichtete Glättung, vorzugsweise nach der Rauch-Tung-Striebel-Methode, geglättet werden.

9. Verfahren nach einem der Ansprüche 1 bis 8, **dadurch gekennzeichnet, dass** die Zuordnungskosten für eine Kontakttrack-Paarung eines neuen und eines alten Kontakttrack mit einem willkürlich vorgegebenen Maximalwert angesetzt werden, wenn die Zeitdifferenz zwischen dem Beginn des neuen Kontakttrack (NT) und dem Ende des alten Kontakttrack (OT) größer als ein Vorgabewert, z.B. 10 Minuten, ist.

10. Verfahren nach Anspruch 1, **dadurch gekennzeichnet, dass** zur Kostenberechnung für alle gefundenen neuen und alten Kontakttracks deren als Attribute zugeordnete Frequenzlinien aufgesucht werden und dass die Zuordnungskosten aus der Frequenzdifferenz der Frequenzlinien $FL_{OT}$; $FL_{NT}$ und deren Standardabweichung $\sigma_{FLOT}$; $\sigma_{FLNT}$ der Kontakttracks einer Kontakttrack-Paarung berechnet werden, gemäß

$$C_{i,j}^{k} = \frac{\left(FL_{OTi}^{k} - FL_{NTj}^{k}\right)^2}{\sigma_{FL_{OTi}}^2 + \sigma_{FL_{OTj}}^2} \cdot$$

11. Verfahren nach Anspruch 10, **dadurch gekennzeichnet, dass** bei einer gleichen Anzahl von Frequenzlinien der Kontakttracks der Kontakttrack-Paarungen zum Kosteneintrag in den Zuordnungsteil der Kostenmatrix die Summe der für alle k Frequenzlinien mit k = 1, 2 ... $N_{FL}$ berechneten Zuordnungskosten durch die Anzahl $N_{FL}$ der einem Kontakttrack zugeordneten Frequenzlinien dividiert wird, gemäß

$$C_{i,j} = \frac{1}{N_{FL}} \sum_{k=1}^{N_{FL}} C_{i,j}^{k} \cdot$$

12. Verfahren nach Anspruch 11, **dadurch gekennzeichnet, dass** bei einer ungleichen Anzahl von Frequenzlinie der Kontakttracks die Zuordnungskosten nur für diejenigen Kontakttrack-Paarungen von alten und neuen Kontakttracks berechnet werden, bei denen Frequenzlinienpaare mit einer gegenüber einem Vorgabewert kleineren Frequenzdifferenz auftreten, und dass zur Kosteneintragung in den Zuordnungsteil der Kostenmatrix die Summe der für alle k Frequenzlinienpaare k = 1, 2 ... $N_{Paare}$ berechneten Zuordnungskosten durch das Quadrat der Anzahl $N_{Paare}$ der Frequenzlinienpaare dividiert wird, gemäß

$$C_{i,j} = \frac{1}{N_{Paare}^2} \sum_{k=1}^{N_{Paare}} C_{i,j}^{k} \quad ,$$

und dass für Kontakttrack-Paarungen, die keine solche Frequenzlinienpaare aufweisen, der Kosteneintrag in den Zuordnungsteil der Kostenmatrix auf ein willkürliches Maximum gesetzt wird.

13. Verfahren nach einem der Ansprüche 1 bis 12, **dadurch gekennzeichnet, dass** der Kosteneintrag in den Nichtzu-

ordnungteil der Kostenmatrix für alle alten Kontakttracks gleich vorgegeben wird.

14. Verfahren nach einem der Ansprüche 1 bis 13, **dadurch gekennzeichnet, dass** die sequenzielle Track-to-Track-Fusion in der Weise durchgeführt wird, dass alle Sensortracks des genauesten Sensors in eine zentrale Trackdatei als zentrale Tracks eingeschrieben werden, dass die Sensortracks eines zweiten Sensors zu aufeinanderfolgenden Zeitpunkten mit den zentralen Tracks auf ihre Zuordnung zu einem gemeinsamen Ziel geprüft und bei einer ausreichend hohen Wahrscheinlichkeit der Zuordnung dem jeweiligen zentralen Track zugeordnet und mit diesem fusioniert werden, dass die Trackdatei durch Überschreiben mit den fusionierten Tracks und Einschreiben der nicht zugeordneten Sensortracks des weiteren Sensors aktualisiert wird und dass die vorgenannten Verfahrensschritte mit den zentralen Tracks der jeweils aktualisierten Trackdatei und den Sensortracks eines jeweils weiteren Sensors solange wiederholt werden, bis alle Sensortracks als zentrale Tracks in der Trackdatei enthalten sind, und dass die in der zuletzt aktualisierten Trackdatei vorhandenen zentralen Tracks als Kontakttracks ausgegeben werden.

15. Verfahren nach Anspruch 14, **dadurch gekennzeichnet, dass** für die Prüfung der Zuordnungswahrscheinlichkeit und die Zuordnung von zentralen Tracks und Sensortracks eines Sensors die Global-Nearest-Neighbor-Methode, GNN-Methode, angewandt wird.

16. Verfahren nach Anspruch 15, **dadurch gekennzeichnet, dass** mit den i zentralen Tracks der aktualisierten zentralen Trackdatei und den j Sensortracks eines beliebigen Sensors eine zweiteilige Kostenmatrix mit einem Zuordnungsteil und einem Nichtzuordnungsteil aufgestellt wird, in deren Zuordnungsteil die Kosten der wechselseitigen Zuordnung der i zentralen Tracks und der j Sensortracks und in deren Nichtzuordnungsteil die Kosten der Nichtzuordnung der i zentralen Tracks eingetragen werden, dass diejenigen Matrixelemente bestimmt werden, deren aufaddierte Kosten ein Minimum ergeben, und dass die zentralen Tracks und Sensortracks der durch die bestimmten Matrixelemente definierten Track-Paarungen einander zugeordnet werden.

17. Verfahren nach Anspruch 16, **dadurch gekennzeichnet, dass** die Zuordnungskosten $C_{i,j}$ zum Zeitpunkt $t_k$ als Summe der Quadrate der normierten, statistischen Abstände der Peilungen und vorzugsweise zusätzlich der Peilraten berechnet werden, gemäß

$$C_{i,j} = \sum_{n=k-bl+1}^{k} \frac{\left(\Theta_{A,i,n} - \Theta_{B,j,n}\right)^2}{\sigma^2_{\Theta_{A,i,n}} + \sigma^2_{\Theta_{B,j,n}}} + \alpha \cdot \sum_{n=k-bl+1}^{k} \frac{\left(\dot{\Theta}_{A,i,n} - \dot{\Theta}_{B,j,n}\right)^2}{\sigma^2_{\dot{\Theta}_{A,i,n}} + \sigma^2_{\dot{\Theta}_{B,j,n}}},$$

wobei A für die zentrale Trackdatei und B für einen beliebigen Sensor stehtn $\Theta$, $\dot{\Theta}$ Peilung une Peilrate une $\sigma$ die jeweiligen Standardabweichungen bezeichnen, $\alpha$ mit Null oder "1" gewählt und die Summation über ein gleitendes Zeitfenster der Länge b1 durchgeführt wird.

18. Verfahren nach Anspruch 16 oder 17, **dadurch gekennzeichnet, dass** die Kosten für die Nichtzuordnung der i zentralen Tracks der aktualisierten zentralen Trackdatei für alle i zentralen Tracks gleich vorgegeben werden.

19. Verfahren nach einem der Ansprüche 16 bis 18, **dadurch gekennzeichnet, dass** die Fusion eines Sensortrack mit einem zugeordneten zentralen Track mittels konvexer Addition durchgeführt wird.

20. Verfahren nach einem der Ansprüche 1 bis 19, **dadurch gekennzeichnet, dass** das Kostenminimum mittels des Auction-Algorithmus oder nach der JVC-(Jonker, Volgenant, Castanon)Methode bestimmt wird.

21. Verfahren nach einem der Ansprüche 1 bis 20, **dadurch gekennzeichnet, dass** alle Kontakttracks und Zieltracks visualisiert werden.

22. Verfahren nach Anspruch 21, **dadurch gekennzeichnet, dass** bei der Visualisierung der Zieltracks die Zeitlücke zwischen den einem Zieltrack zugehörigen Kontakttracks durch eine die Kontakttracks miteinander verbindende Linie ausgefüllt wird.

**Claims**

1. A method for generation of target-marking bearing tracks for a plurality of sound-emitting targets, whose bearings are found in a sea area by a plurality of sensors which have hydroacoustic receiving antennas, in which a sensor track comprising successive bearings in time is produced by each sensor for each detected target, and sensor tracks of a plurality of sensors, which are derived from a common target, are fused to form contact tracks, which each contains only bearings of the common target, **characterized in that** the fusion of the sensor tracks is made on the basis of the sensor tracks of the most accurate sensor in a sequential track-to-track fusion process, contact tracks which are offset with respect to one another in time are checked for the probability of their association and for this all of the contact tracks which are present at a current time $t_a$ are searched for as new contact tracks (NT), and all the contact tracks whose track end occurs before the current time $t_a$ are searched for as old contact tracks (OT), in each case at predetermined time intervals, and all the old and new contact tracks are checked by means of cost calculation for association with one another in pairs in such a manner, that a two-part cost matrix with an association part and a non-association part is created using all the j new contact tracks and i old contact tracks found for the current time $t_a$ in the association part of which the costs $C_{i,j}$ of the alternate association of the j new and i old contact tracks are entered, and in the non-association part of which the costs $C_n$ of the non-association of the i old contact tracks (OT) are entered, and those matrix elements are determined whose added costs result in a minimum, and **in that** the new and old contact tracks of the contact track pairs defined by the specific matrix elements are associated with one another as contact tracks which are offset in time and have a high probability of association, and the contact tracks which have been associated with one another are identified as continuous target tracks.

2. The method as claimed in claim 1, **characterized in that** for cost calculation bearings are retrodicted for all the new contact tracks (NT) found, for the time intervals between the time of their start and the time of the end of the old contact tracks (OT), and bearings are predicted for all the old contact tracks (OT) found, for the time intervals between the time of their end and the time of the start of the new contact track (NT), **in that** the association costs for a time $t_k$ are calculated from the difference between the bearings $B_{pr\ddot{a}}$; $B_{retro}$ predicted and retrodicted for this time $t_k$ and their standard deviations $\sigma_{Bpr\ddot{a}}$; $\sigma_{Bretro}$ of the contact tracks of a contact track pair using:

$$C_{i,j}^k = \frac{\left[B_{pr\ddot{a}}^i(t_k) - B_{retro}^j(t_k)\right]^2}{\sigma_{B_{pr\ddot{a}}^i}^2(t_k) + \sigma_{B_{retro}^j}^2(t_k)}.$$

3. The method as claimed in claim 2, **characterized in that** the association costs for a time $t_1$, which is defined by the end of the time of the old contact track (OT), are calculated for a time $t_{Npr\ddot{a}}$, which is defined by the start of the new contact track (NT), and for a time $t_{Npr\ddot{a}/2}$, which is defined by half the time difference between the end of the old and the start of the new contact track, and **in that** the sum of the calculated association costs is averaged for the cost entry into the association part of the cost matrix.

4. The method as claimed in claim 1, **characterized in that** values of the signal-to-noise ratio (SNR values) for the time intervals between the times of their start and the time of the end of the old contact tracks (OT) are retrodicted for cost calculation for all the new contact tracks (NT) found, and SNR values for the time intervals between the time of their end and the start of the new contact tracks (NT) are predicted for all the old contact tracks (OT) found,

in that the association costs $C_{i,j}^k$ for a time $t_k$ are calculated from the difference between the SNR values ($SNR_{pr\ddot{a}}$, $SNR_{retro}$) predicted and retrodicted for this time and their standard deviations $\sigma_{SNRpr\ddot{a}}$; $\sigma_{SNRretro}$ of the contact tracks of a contact track pair, using:

$$C_{i,j}^k = \frac{SNR_{pr\ddot{a}}(t_k) - SNR_{retro}(t_k)}{\sigma_{SNR_{pr\ddot{a}}}^2(t_k) + \sigma_{SNR_{retro}}^2(t_k)}.$$

5. The method as claimed in claim 2 or 4, **characterized in that** the association costs are calculated for a multiplicity of preferably equidistant times $t_k$ between the end $t_1$ of the old contact track (OT) and the start $t_{Npr\ddot{a}}$ of the new contact track (NT), and the sum of the calculated association costs is averaged for the cost entry in the association part of the cost matrix, using:

$$C_{i,j} \;=\; \frac{1}{N_{pr\ddot{a}}} \sum_{k=1}^{N_{pr\ddot{a}}} C_{i,j}^{k} \; .$$

6.  The method as claimed in claim 1, **characterized in that** bearing rates for the time intervals between the time of their start and the time of the end of the old contact tracks (OT) are retrodicted for cost calculation for all the new contact tracks (NT) found, and bearing rates for the time intervals between the time of their end and the time of the start of the new contact tracks (NT) are predicted for all the old contact tracks (OT) found, **in that** the association costs for a time $t_k$ are calculated from the difference between the bearing rates $BR_{pr\ddot{a}}$; $BR_{retro}$ predicted and retrodicted for this time $t_k$ and their standard deviations $\sigma BR_{pr\ddot{a}}$; $\sigma_{BRretro}$ of the contact tracks of a contact track pair, using:

$$C_{i,j}^{k} \;=\; \frac{\left[ BR_{pr\ddot{a}}^{i}\!\left(t_k\right) \;-\; BR_{retro}^{j}\!\left(t_k\right) \right]^{2}}{\sigma_{BR_{pr\ddot{a}}^{i}}^{2}\!\left(t_k\right) \;+\; \sigma_{BR_{retro}^{j}}^{2}\!\left(t_k\right)} \; .$$

7.  The method as claimed in claim 4 or 6, **characterized in that** the association costs for a time $t_1$ which is defined by the end of the time of the old contact track (OT) and for a time $t_{Npr\ddot{a}}$ which is defined by the start of the new contact track (NT) are calculated, and the sum of the calculated association costs is averaged for the cost entry into the association part of the cost matrix.

8.  The method as claimed in one of claims 2 to 7, **characterized in that** the new contact tracks (NT) found are smoothed before retrodiction of the bearings and/or the bearing rates and/or SNR values into the time intervals by smoothing in the backward direction, preferably using the Rauch-Tung-Striebel method.

9.  The method as claimed in one of claims 1 to 8, **characterized in that** the association costs for a contact track pair of a new and of an old contact track are defined with an arbitrarily predetermined maximum value when the time difference between the start of the new contact track (NT) and the end of the old contact track (OT) is greater than a preset value, for example 10 minutes.

10.  The method as claimed in claim 1, **characterized in that** the frequency lines of all the new and old contact tracks found associated as attributes are searched for for all the new and old contact tracks found, for cost calculation, and **in that** the association costs are calculated from the frequency difference between the frequency lines $FL_{OT}$; $FL_{NT}$ and their standard deviation $\sigma_{FLOT}$; $\sigma_{FLNT}$ of the contact tracks of a contact track pair, using

$$C_{i,j}^{k} \;=\; \frac{\left( FL_{OTi}^{k} \;-\; FL_{NTj}^{k} \right)^{2}}{\sigma_{FL_{OTi}}^{2} \;+\; \sigma_{FL_{OTj}}^{2}} \; .$$

11.  The method as claimed in claim 10, **characterized in that** if the number of frequency lines of the contact tracks of the contact track pairs is equal, for the cost entry in the association part of the cost matrix, the sum of the association costs calculated for all k frequency lines where $k = 1, 2 \ldots N_{FL}$ is divided by the number $N_{FL}$ of the frequency lines associated with one contact track, using

$$C_{i,j} \;=\; \frac{1}{N_{FL}} \sum_{k=1}^{N_{FL}} C_{i,j}^{k} \; .$$

12.  The method as claimed in claim 11, **characterized in that**, when the number of frequency lines of the contact tracks is not equal, the association costs are calculated only for those contact track pairs of old and new contact tracks for which frequency line pairs occur with a frequency difference which is less than a preset value, and **in that**, for the cost entry into the association part of the cost matrix, the sum of the association costs calculated for all k frequency line pairs k = 1, 2 ... $N_{pairs}$ is divided by the square of the number $N_{pairs}$ of the frequency line pairs, using:

$$C_{i,j} \;=\; \frac{1}{N_{Paare}^2} \sum_{k=1}^{N_{Paare}} C_{i,j}^{k} \; ,$$

and **in that**, for contact track pairs which have no such frequency line pairs, the cost entry into the association part of the cost matrix is set to an arbitrary maximum.

13. The method as claimed in one of claims 1 to 12, **characterized in that** the cost entry in the non-association part of the cost matrix is preset to be the same for all old contact tracks.

14. The method as claimed in one of claims 1 to 13, **characterized in that** the sequential track-to-track fusion is carried out in such a manner that all sensor tracks of the most accurate sensor are written to a central track file as central tracks, **in that** the sensor tracks of a second sensor relating to successive times are checked using the central tracks for their association with a common target and, if the probability of association is sufficiently high, are associated with the respective central track and are fused with it, **in that** the track file is updated by overwriting with the fused tracks and by writing in the non-associated sensor tracks of the further sensor, and **in that** the abovementioned method steps are repeated using the central tracks of the respectively updated track file and the sensor tracks of a respective further sensor until all the sensor tracks are contained as central tracks in the track file, and **in that** the central tracks in the most recently updated track file are emitted as contact tracks.

15. The method as claimed in claim 14, **characterized in that** the global nearest neighbor method, GNN method, is used for checking the association probability and the association of central tracks and sensor tracks of a sensor.

16. The method as claimed in claim 15, **characterized in that** a two-part cost matrix having an association part and a non-association part is set up using the i central tracks of the updated central track file and the j central tracks of any desired sensor, in the association part of which two-part cost matrix the costs of the alternate association of the i central tracks and of the j sensor tracks are entered, and in the non-association part of which the costs of non-association of the i central tracks are entered, **in that** those matrix elements are determined whose added costs result in a minimum, and **in that** the central tracks and sensor tracks of the track pairs defined by the specific matrix elements are associated with one another.

17. The method as claimed in claim 16, **characterized in that** the association costs $C_{i,j}$ at the time $t_k$ are calculated as the sum of the squares of the normalized, statistical intervals between the bearings and preferably additionally the bearing rates, using

$$C_{i,j} \;=\; \sum_{n=k-b1+1}^{k} \frac{\left(\Theta_{A,i,n} - \Theta_{B,j,n}\right)^2}{\sigma_{\Theta_{A,i,n}}^2 + \sigma_{\Theta_{B,j,n}}^2} \;+\; \alpha \cdot \sum_{n=k-b1+1}^{k} \frac{\left(\dot{\Theta}_{A,i,n} - \dot{\Theta}_{B,j,n}\right)^2}{\sigma_{\dot{\Theta}_{A,i,n}}^2 + \sigma_{\dot{\Theta}_{B,j,n}}^2} \; ,$$

where A is the central track file and B is any desired sensor, $\Theta$, $\dot{\Theta}$ are the bearing and bearing rate, and $\sigma$ is the respective standard deviation, $\alpha$ is chosen to be zero or "1" and the summation process is carried out over a sliding time window of length b1.

18. The method as claimed in claim 16 or 17, **characterized in that** the costs for non-association of the i central tracks of the updated central track file are preset to be the same for all i central tracks.

19. The method as claimed in one of claims 16 to 18, **characterized in that** the fusion of a sensor track with an associated central track is carried out by means of convex addition.

20. The method as claimed in one of claims 1 to 19, **characterized in that** the cost minimum is determined by means of the auction algorithm or using the JVC (Jonker, Volgenant, Castañon) method.

**21.** The method as claimed in one of claims 1 to 20, **characterized in that** all the contact tracks and target tracks are visualized.

**22.** The method as claimed in claim 21, **characterized in that**, during the visualization of the target tracks, the time interval between the contact tracks associated with a target track is filled by a line which connects the contact tracks to one another.

**Revendications**

**1.** Procédé pour générer des tracés de relèvement de marquage de cible pour plusieurs cibles à rayonnement sonore, lesquelles sont relevées dans un domaine maritime par plusieurs capteurs présent des antennes de réception hydroacoustiques, selon lequel un tracé de capteur constitué de relèvements successifs dans le temps est délivré par chaque capteur pour chaque cible détectée et les tracés de capteur de plusieurs capteurs qui sont dérivés d'une cible commune sont fusionnés en tracés de contact qui ne contiennent à chaque fois que les relèvements de la cible commune, **caractérisé en ce que** la fusion des tracés de capteur est effectuée au cours d'une fusion séquentielle de tracé à tracé en partant des tracés de capteur du capteur le plus précis, les tracés de contact décalés dans le temps sont soumis à un contrôle de probabilité de leur interdépendance et, pour ce faire, tous les tracés de contact à chaque fois présents à un instant actuel $t_a$ sont examinés à des intervalles de temps prédéfinis en tant que nouveaux tracés de contact (NT) et tous les tracés de contact dont la fin de tracé se trouve avant l'instant actuel $t_a$ en tant qu'anciens tracés de contact (OT) et tous les anciens et nouveaux tracés de contact font l'objet d'un contrôle d'appartenance par paire au moyen d'un calcul de coût en ce qu'une matrice de coût en deux parties avec une partie d'affectation et une partie de non affectation est établie avec tous les j nouveaux et i anciens tracés de contact trouvés à l'instant actuel $t_a$, dans la partie d'affectation de laquelle sont consignés les coûts $C_{i,j}$ de l'affectation alternée des j nouveaux et des i anciens tracés de contact et, dans la partie de non affectation, les coûts $C_n$ de la non affectation des i anciens tracés de contact (OT) et les éléments de la matrice dont les coûts additionnés produisent un minimum sont additionnés, et **en ce que** les nouveaux et les anciens tracés de contact des paires de tracés de contact définies par les éléments de matrice déterminés sont affectés en tant que tracés de contact décalés dans le temps avec une forte probabilité d'une interdépendance les uns aux autres et les tracés de contact affectés les uns aux autres sont signalés en tant que tracés de cible ininterrompus.

**2.** Procédé selon la revendication 1, **caractérisé en ce que** pour le calcul du coût, une rétrodiction des relèvements est effectuée pour tous les nouveaux tracés de contact (NT) trouvés pendant les intervalles de temps entre l'instant de leur début et l'instant de la fin de l'ancien tracé de contact (OT) et une prédiction des relèvements est effectuée pour tous les anciens tracés de contact (OT) trouvés pendant les intervalles de temps entre l'instant de leur fin et l'instant du début du nouveau tracé de contact (NT), **en ce que** les coûts d'affectation des tracés de contact d'une paire de tracés de contact pour un instant $t_k$ sont calculés à partir de la différence entre les relèvements prédits et rétrodits $B_{prä}$ ; $B_{retro}$ pour cet instant $t_k$ et leurs écarts types $\sigma B_{prä}$ ; $\sigma B_{retro}$ conformément à

$$C_{i,j}^{k} = \frac{\left[B_{pr\ddot{a}}^{i}(t_{k}) - B_{retro}^{j}(t_{k})\right]^{2}}{\sigma_{B_{pr\ddot{a}}^{i}}^{2}(t_{k}) + \sigma_{B_{retro}^{j}}^{2}(t_{k})} .$$

**3.** Procédé selon la revendication 2, **caractérisé en ce que** les coûts d'affectation sont calculés pour un instant $t_1$, lequel est défini par la fin dans le temps de l'ancien tracé de contact (OT), pour un instant $t_{Nprä}$, lequel est défini par le début du nouveau tracé de contact (NT), et pour un instant $t_{Nprä/2}$, lequel est défini par la moitié de la différence de temps entre la fin de l'ancien et le début du nouveau tracé de contact, et **en ce que** la moyenne de la somme des coûts d'affectation calculés est déterminée pour l'entrée du coût dans la partie d'affectation de la matrice de coût.

**4.** Procédé selon la revendication 1, **caractérisé en ce que** pour le calcul du coût, une rétrodiction des valeurs du rapport signal utile/signal parasite (valeurs SNR) est effectuée pour tous les nouveaux tracés de contact (NT) trouvés pendant les intervalles de temps entre les instants de leur début et l'instant de la fin de l'ancien tracé de contact (OT) et une prédiction des valeurs SNR est effectuée pour tous les anciens tracés de contact (OT) trouvés pendant les intervalles de temps entre l'instant de leur fin et le début du nouveau tracé de contact (NT), **en ce que** les coûts d'affectation $C_{i,j}^{k}$ des tracés de contact d'une paire de tracés de contact pour un instant $t_k$ sont calculés à partir de la différence entre les valeurs SNR prédites et rétrodites (SNR$_{prä}$ ; SNR$_{retro}$) pour cet instant et leurs écarts types

$\sigma SNR_{prä}$ ; $\sigma SNR_{retro}$ conformément à

$$C_{i,j}^{k} = \frac{SNR_{prä}(t_k) - SNR_{retro}(t_k)}{\sigma_{SNR_{prä}}^2(t_k) + \sigma_{SNR_{retro}}^2(t_k)} .$$

5. Procédé selon la revendication 2 ou 4, **caractérisé en ce que** les coûts d'affectation pour une pluralité d'instants $t_k$ de préférence équidistants entre la fin $t_1$ de l'ancien tracé de contact (OT) et le début $t_{Nprä}$ du nouveau tracé de contact (NT) sont calculés et la moyenne de la somme des coûts d'affectation calculés est déterminée pour l'entrée du coût dans la partie d'affectation de la matrice de coût conformément à

$$C_{i,j} = \frac{1}{N_{prä}} \sum_{k=1}^{N_{prä}} C_{i,j}^{k} .$$

6. Procédé selon la revendication 1, **caractérisé en ce que** pour le calcul du coût, une rétrodiction des taux de relèvement est effectuée pour tous les nouveaux tracés de contact (NT) trouvés pendant les intervalles de temps entre l'instant de leur début et l'instant de la fin de l'ancien tracé de contact (OT) et une prédiction des taux de relèvement est effectuée pour tous les anciens tracés de contact (OT) trouvés pendant les intervalles de temps entre l'instant de leur fin et l'instant du début du nouveau tracé de contact (NT), **en ce que** les coûts d'affectation pour un instant $t_k$ sont calculés à partir de la différence entre les taux de relèvement prédits et rétrodits $BR_{prä}$ ; $BR_{retro}$ pour cet instant et leurs écarts types $\sigma BR_{prä}$ ; $\sigma BR_{retro}$ conformément à

$$C_{i,j}^{k} = \frac{\left[BR_{prä}^{i}\left(t_k\right) - BR_{retro}^{j}\left(t_k\right)\right]^2}{\sigma_{BR_{prä}^{i}}^2\left(t_k\right) + \sigma_{BR_{retro}^{j}}^2\left(t_k\right)} .$$

7. Procédé selon la revendication 4 ou 6, **caractérisé en ce que** les coûts d'affectation sont calculés pour un instant $t_1$, lequel est défini par la fin dans le temps de l'ancien tracé de contact (OT), et pour un instant $t_{Nprä}$, lequel est défini par le début du nouveau tracé de contact (NT), et la moyenne de la somme des coûts d'affectation calculés est déterminée pour l'entrée du coût dans la partie d'affectation de la matrice de coût.

8. Procédé selon l'une des revendications 2 à 7, **caractérisé en ce que** les nouveaux tracés de contact (NT) trouvés sont lissés avant la rétrodiction des relèvements ou des taux de relèvement ou encore des valeurs SNR dans les intervalles de temps par un lissage dirigé vers l'arrière, de préférence selon la méthode Rauch-Tung-Striebel.

9. Procédé selon l'une des revendications 1 à 8, **caractérisé en ce que** les coûts d'affectation pour une paire de tracés de contact d'un nouveau et d'un ancien tracé de contact sont estimés avec une valeur maximale prédéfinie de manière aléatoire lorsque la différence de temps entre le début du nouveau tracé de contact (NT) et la fin de l'ancien tracé de contact (OT) est supérieure à une valeur de consigne, par exemple 10 minutes.

10. Procédé selon la revendication 1, **caractérisé en ce que** pour le calcul du coût, pour tous les nouveaux et anciens tracés de contact trouvés, leurs lignes de fréquence affectées en tant qu'attributs sont recherchées et **en ce que** les coûts d'affectation des tracés de contact d'une paire de tracés de contact sont calculés à partir de la différence de fréquence entre les lignes de fréquence $FL_{OT}$ ; $FL_{NT}$ et leur écart type $\sigma FL_{OT}$ ; $\sigma FL_{NT}$ conformément à

$$C_{i,j}^{k} = \frac{\left(FL_{OTi}^{k} - FL_{NTj}^{k}\right)^2}{\sigma_{FL_{OTi}}^2 + \sigma_{FL_{OTj}}^2} .$$

**11.** Procédé selon la revendication 10, **caractérisé en ce qu'**en présence d'un nombre égal de lignes de fréquence des tracés de contact des paires de tracés de contact, pour l'entrée du coût dans la partie d'affectation de la matrice de coût, la somme des coûts d'affectation calculés pour toutes les k lignes de fréquence, avec k = 1, 2, ... $N_{FL}$, est divisée par le nombre $N_{FL}$ de lignes de fréquence affectées à un tracé de contact conformément à

$$C_{i,j} = \frac{1}{N_{FL}} \sum_{k=1}^{N_{FL}} C_{i,j}^{k} \, .$$

**12.** Procédé selon la revendication 11, **caractérisé en ce qu'**en présence d'un nombre inégal de lignes de fréquence des tracés de contact, les coûts d'affectation ne sont calculés que pour les paires de tracés de contact des anciens et des nouveaux tracés de contact pour lesquels les paires de lignes de fréquence se produisent avec une différence de fréquence inférieure à une valeur de consigne et **en ce que** pour l'entrée du coût dans la partie d'affectation de la matrice de coût, la somme des coûts d'affectation calculés pour toutes les k lignes de fréquence, avec k = 1, 2, ... $N_{paires}$, est divisée par le carré du nombre $N_{paires}$ de paires de lignes de fréquence conformément à

$$C_{i,j} = \frac{1}{N_{Paare}^{2}} \sum_{k=1}^{N_{Paare}} C_{i,j}^{k} \, ,$$

et **en ce que** pour les paires de tracés de contact qui ne présentent pas une telle paire de lignes de fréquence, l'entrée du coût dans la partie d'affectation de la matrice de coût est fixé à un maximum aléatoire.

**13.** Procédé selon l'une des revendications 1 à 12, **caractérisé en ce que** l'entrée du coût dans la partie de non affectation de la matrice de coût est prédéfinie identique pour tous les anciens tracés de contact.

**14.** Procédé selon l'une des revendications 1 à 13, **caractérisé en ce que** la fusion séquentielle de tracé à tracé est effectuée de sorte que tous les tracés de capteur du capteur le plus précis sont enregistrés dans un fichier de tracé central en tant que tracés centraux, **en ce que** les tracés de capteur d'un deuxième capteur sont soumis à des instants ultérieurs à un contrôle de leur affectation à une cible commune avec les tracés centraux et, en présence d'une probabilité suffisamment élevée de l'affectation, ils sont affectés au tracé central correspondant et fusionnés avec celui-ci, **en ce que** le fichier de tracé est actualisé par réécriture avec les tracés fusionnés et enregistrement des tracés de capteur non affectés du capteur supplémentaire et **en ce que** les étapes du procédé mentionnées précédemment sont répétées avec les tracés centraux du fichier de tracé à chaque fois actualisé et les tracés de capteur d'un capteur supplémentaire correspondant jusqu'à ce que tous les tracés de capteur soient contenus dans le fichier de tracé en tant que tracés centraux et **en ce que** les tracés centraux présents dans le fichier de tracé actualisé en dernier sont délivrés en tant que tracés de contact.

**15.** Procédé selon la revendication 14, **caractérisé en ce que** la méthode du plus proche voisin global, ou méthode GNN, est utilisée pour le contrôle de la probabilité d'affectation et l'affectation des tracés centraux et des tracés de capteur d'un capteur.

**16.** Procédé selon la revendication 15, **caractérisé en ce qu'**une matrice de coût en deux parties avec une partie d'affectation et une partie de non affectation est établie avec les i tracés centraux du fichier de tracé central actualisé et les j tracés de capteur d'un capteur quelconque, dans la partie d'affectation de laquelle sont consignés les coûts de l'affectation alternée des i tracés centraux et des j tracés de capteur et, dans la partie de non affectation, les coûts de la non affectation des i tracés centraux, **en ce que** sont déterminés les éléments matriciels dont les coûts additionnés produisent un minimum, et **en ce que** les tracés centraux et les tracés de capteur des paires de tracés définies par les éléments matriciels déterminés sont affectés les uns aux autres.

**17.** Procédé selon la revendication 16, **caractérisé en ce que** les coûts d'affectation $C_{i,j}$ à l'instant $t_k$ sont calculés en tant que somme des carrés des écarts statistiques normalisés entre les relèvements et de préférence en plus des taux de relèvement conformément à

$$C_{i,j} = \sum_{n=k-b1+1}^{k} \frac{\left(\Theta_{A,i,n} - \Theta_{B,j,n}\right)^2}{\sigma_{\Theta_{A,i,n}}^2 + \sigma_{\Theta_{B,j,n}}^2} + \alpha \cdot \sum_{n=k-b1+1}^{k} \frac{\left(\dot\Theta_{A,i,n} - \dot\Theta_{B,j,n}\right)^2}{\sigma_{\dot\Theta_{A,i,n}}^2 + \sigma_{\dot\Theta_{B,j,n}}^2},$$

A désignant le fichier de tracé central et B un capteur quelconque, $\Theta$, $\dot\Theta$ le relèvement et le taux de relèvement et $\sigma$ les écarts types respectifs, $\alpha$ étant choisi égal à 0 ou à 1 et la somme étant effectuée sur un créneau temporel glissant de longueur b1.

18. Procédé selon la revendication 16 ou 17, **caractérisé en ce que** les coûts pour la non affectation des i tracés centraux du fichier de tracé central actualisé sont prédéfinis identiques pour tous les i tracés centraux.

19. Procédé selon l'une des revendications 16 à 18, **caractérisé en ce que** la fusion d'un tracé de capteur avec un tracé central affecté est effectuée au moyen d'une addition convexe.

20. Procédé selon l'une des revendications 1 à 19, **caractérisé en ce que** le minimum de coût est déterminé au moyen de l'algorithme des enchères ou selon la méthode JVC (Jonker, Volgenant, Castanon).

21. Procédé selon l'une des revendications 1 à 20, **caractérisé en ce que** tous les tracés de contact et les tracés de cible sont visualisés.

22. Procédé selon la revendication 21, **caractérisé en ce que** lors de la visualisation des tracés de cible, les intervalles de temps entre les tracés de contact appartenant au tracé de cible sont remplis par une ligne qui relie les tracés de contact entre eux.

EP 2 149 055 B1

Fig. 1

20

| Sensor A Tracks | Zuordnung | | | | Nichtzuordnung | | | |
| | Sensor B Tracks | | | | No Track Sensor A | | | |
| | 1 | 2 | $\bullet\ \bullet\ \bullet$ | $N_B$ | 1 | 2 | $\bullet\ \bullet\ \bullet$ | $N_A$ |
|---|---|---|---|---|---|---|---|---|
| 1 | $c_{11}$ | $c_{12}$ | | $c_{1N_B}$ | $c_N$ | X | X | X |
| 2 | $c_{21}$ | $c_{22}$ | | $c_{2N_B}$ | X | $c_N$ | X | X |
| $\vdots$ | | | | | X | X | $\ddots$ | X |
| $N_A$ | $c_{N_A1}$ | $c_{N_A2}$ | | $c_{N_AN_B}$ | X | X | X | $c_N$ |

**Fig. 2**

| Sensor A Tracks | Zuordnung | | | Nichtzuordnung | | |
| | Sensor B Tracks | | | No Track Sensor A | | |
| | 1 | 2 | 3 | 1 | 2 | 3 |
|---|---|---|---|---|---|---|
| 1 | 6 | 9 | 16 | ⑨ | X | X |
| 2 | 14 | ③ | 10 | X | 9 | X |
| 3 | ⑧ | 4 | 13 | X | X | 9 |

**Fig. 3**

**Fig. 4**

| | Zuordnung | | | | Nichtzuordnung | | |
|---|---|---|---|---|---|---|---|
| | $NT_1$ | $NT_2$ | $NT_3$ | $NT_4$ | OT | OT | OT |
| $OT_1$ | $C_{11}$ | $C_{12}$ | $C_{13}$ | $C_{14}$ | $C_n$ | X | X |
| $OT_2$ | $C_{21}$ | $C_{22}$ | $C_{23}$ | $C_{24}$ | X | $C_n$ | X |
| $OT_3$ | $C_{31}$ | $C_{32}$ | $C_{33}$ | $C_{34}$ | X | X | $C_n$ |

**Fig. 5**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10129726 A1
- DE 10352738 A1

**In der Beschreibung aufgeführte Nicht-Patentliteratur**

- **L. KÜHNLE.** Classification and Identification - CAI - by Submarine Sonars. *Naval Forces,* November 1987, 27-31
- **MCINTYRE C M et al.** Data association in passive acoustic tracking. *PROCEEDINGS OF THE SPIE - THE INTERNATIONAL SOCIETY FOR OPTICAL ENGINEERING USA,* 1993, ISSN 002486023, ISSN: 0277-786X, 376-385
- The use of multiple sensors for multiple-target tracking. **BLACKMAN S S.** MULTIPLE-TARGET TRACKING WITH RADAR APPLICATIONS. DEDHAM, ARTECH HOUSE INC, 357-396
- **YEOM S-W. et al.** Improving track continuity using track segment association. *AEROSPACE CONFERENCE, 2003, PROCEEDINGS,* 08. Marz 2003, ISBN 978-0-7803-7651-9
- **D.P. BERTSEKAS.** Auction algorithms for network flow problems: A tutorial introduction. *Computational Optimization and Application,* 1992, vol. 1, 7-66
- **O.E. DRUMMOND ; D.A. CASTAÑON ; M.S. BELLOVIN.** Comparison of 2-D assignment algorithms for rectangular, floating point cost matrices. *Proc. of SDI Panls on Tracking, No. 4,* Dezember 1990, 81-97